# EUROPEAN PATENT APPLICATION

(11) **EP 4 529 064 A1**
(43) Date of publication of application: **26.03.2025**
(21) Application number: 23806655.9
(22) Date of filing: 14.04.2023
(51) Int. Cl.: H04L 5/00

(54) **METADATA TRANSMISSION METHOD AND DEVICE, AND STORAGE MEDIUM**

(30) Priority: 16.05.2022 CN 202210531530
(71) Applicant: Datang Mobile Communications Equipment Co., Ltd., Beijing 100085 (CN)
(72) Inventor: BAI, Wei, Beijing 100085 (CN)
(74) Representative: Studio Torta S.p.A.
(86) International application number: PCT/CN2023/088321
(87) International publication number: WO 2023/221700

(57) **Abstract**

Embodiments of the present disclosure provide a metadata transmission method and device, and a storage medium. The method comprises: a terminal determines s preamble sequences carrying metadata and *t* root sequences corresponding to the s preamble sequences, wherein the metadata comprises s data segments, each data segment corresponds to one preamble sequence, one or more preamble sequences correspond to one root sequence, and *t* and s are both positive integers; and the terminal sends the s preamble sequences and the *t* root sequences. The metadata transmission method and device and the storage medium provided by the embodiments of the present disclosure reduce reception complexity by means of the separate transmission of the roots of the preamble sequences.

## Description

### CROSS-REFERENCES TO RELATED APPLICATIONS

The present application claims priority to Chinese patent application No. 202210531530.3 filed on May 16, 2022, entitled "Metadata Transmission Method and Device, and Storage Medium", which is hereby incorporated by reference in its entirety.

### FIELD

The present application relates to the field of communications, and in particular, to methods and apparatuses for metadata transmission, and a storage medium.

### BACKGROUND

A new type of uncoordinated non-orthogonal multiple access technology is needed to solve a problem of massive terminal access in the 6th generation mobile communication (6G). Massive terminals need to share resources in the uncoordinated non-orthogonal multiple access technology. Therefore, the transmission signals of the terminals need to be separated as much as possible and the base station may detect the data of each terminal separately. The terminal generally needs to transmit metadata. Based on the metadata, the terminal may control the transmission signal to be separated from the transmission signals of other terminals as much as possible, and the base station correctly detects the data transmitted from each terminal based on the metadata.

Based on characteristics of a Zadoff-Chu (ZC) sequence, the ZC sequence may be used to carry metadata. 2^{N} different ZC sequences are required in case that the metadata has N bits. Assuming that these sequences have M roots and CS cyclic shifts, there is a relationship 2^{N}≈M*CS, and then the base station generally needs to perform correlation operations for M times (much greater than 1) to detect metadata.

In the related art, the base station needs to perform too much correlation operations, which results in high reception complexity.

### BRIEF SUMMARY

Embodiments of the present application provide methods and apparatuses for metadata transmission and a storage medium, which solves a problem of high reception complexity in the related art.

An embodiment of the present application provides a method for metadata transmission, performed by a terminal, including:
determining s preamble sequences carrying metadata, and determining *t* root sequences corresponding to the s preamble sequences, where the metadata includes s data segments, each data segment corresponds to one preamble sequence, one or more preamble sequences correspond to one root sequence, and both *t* and *s* are positive integers; and
transmitting the s preamble sequences and the *t* root sequences.

In some embodiments, determining the s preamble sequences carrying the metadata includes:
obtaining the s data segments of the metadata;
determining a preamble sequence pool corresponding to each data segment to obtain s preamble sequence pools; and
determining the s preamble sequences based on the s preamble sequence pools.

In some embodiments, determining the preamble sequence pool corresponding to each data segment includes:
obtaining the preamble sequence pool corresponding to each data segment locally, where all preamble sequences in the preamble sequence pool corresponding to each data segment are given preamble sequences; or
obtaining the preamble sequence pool corresponding to each data segment configured by a network device; or
generating a corresponding preamble sequence pool for each data segment.

In some embodiments, determining the *s* preamble sequences based on the s preamble sequence pools includes:
selecting one preamble sequence from the preamble sequence pool corresponding to each data segment, and determining the s preamble sequences, where a preamble sequence selected from a preamble sequence pool corresponding to an *i*-th data segment is associated with a bit value of the *i*-th data segment, 1≤i≤s.

In some embodiments, the *s* data segments of the metadata are obtained in a given mode or a mode of network indication.

In some embodiments, determining the *t* root sequences corresponding to the *s* preamble sequences includes:
determining *t* root sequence pools corresponding to the s preamble sequence pools, one or more preamble sequence pools corresponding to one root sequence pool; and
determining the *t* root sequences based on the *t* root sequence pools.

In some embodiments, determining the *t* root sequence pools corresponding to the *s* preamble sequence pools includes:
obtaining the *t* root sequence pools corresponding to the s preamble sequence pools locally, one or more preamble sequence pools corresponding to one given root sequence pool; or
obtaining the *t* root sequence pools corresponding to the s preamble sequence pools configured by a network device; or
dividing the *s* preamble sequence pools into *t* preamble sequence pool groups, each preamble sequence pool group includes one or more preamble sequence pools; and generating one root sequence pool for one preamble sequence pool group.

In some embodiments, generating the one root sequence pool for the one preamble sequence pool group includes:
determining a quantity of different roots of each preamble sequence pool in each preamble sequence pool group; and
generating a root sequence pool corresponding to each preamble sequence pool group based on the quantity of different roots of each preamble sequence pool in each preamble sequence pool group.

In some embodiments, determining the *t* root sequences based on the *t* root sequence pools includes:
determining indexes of roots of a target preamble sequence, where the target preamble sequence is a preamble sequence selected from one or more preamble sequence pools corresponding to each root sequence pool;
combining the indexes of the roots of the target preamble sequence into combined data sequentially; and
selecting one root sequence from each root sequence pool based on the combined data to determine the *t* root sequences, where a root sequence selected from a *j*-th root sequence pool is associated with a bit value of a *j*-th combined data, 1 ≤j≤t.

An embodiment of the present application provides a method for metadata transmission, performed by a network device, including:
receiving *t* root sequences and s preamble sequences, where the metadata includes *s* data segments, each data segment corresponds to one preamble sequence, one or more preamble sequences correspond to one root sequence, and both *t* and *s* are positive integers.

In some embodiments, after receiving the *t* root sequences and the *s* preamble sequences, the method further includes:
taking out sequences with different roots from a root sequence pool and performing correlation operations with the *t* root sequences respectively to obtain bit values of roots;
taking out a corresponding root from a preamble sequence pool corresponding to each data segment based on the bit values of roots and performing correlation operations with each preamble sequence to obtain a bit value of each data segment; and
cascading the bit value of each data segment sequentially to obtain a bit value of the metadata.

An embodiment of the present application provides a terminal, including a memory, a transceiver, and a processor;
the memory is used for storing a computer program; the transceiver is used for receiving and transmitting data under control of the processor; and the processor is used for reading the computer program in the memory and performing the following operations:
determining *s* preamble sequences carrying metadata, and determining *t* root sequences corresponding to the *s* preamble sequences, where the metadata includes *s* data segments, each data segment corresponds to one preamble sequence, one or more preamble sequences correspond to one root sequence, and both *t* and *s* are positive integers; and
transmitting the *s* preamble sequences and the *t* root sequences.

In some embodiments, determining the *s* preamble sequences carrying the metadata includes:
obtaining the *s* data segments of the metadata;
determining a preamble sequence pool corresponding to each data segment to obtain *s* preamble sequence pools; and
determining the *s* preamble sequences based on the *s* preamble sequence pools.

In some embodiments, determining the preamble sequence pool corresponding to each data segment includes:
obtaining the preamble sequence pool corresponding to each data segment locally, where all preamble sequences in the preamble sequence pool corresponding to each data segment are given preamble sequences; or
obtaining the preamble sequence pool corresponding to each data segment configured by a network device; or
generating a corresponding preamble sequence pool for each data segment.

In some embodiments, determining the *s* preamble sequences based on the *s* preamble sequence pools includes:
selecting one preamble sequence from the preamble sequence pool corresponding to each data segment, and determining the s preamble sequences, where a preamble sequence selected from a preamble sequence pool corresponding to an *i*-th data segment is associated with a bit value of the *i*-th data segment, 1≤i≤s.

In some embodiments, the s data segments of the metadata are obtained in a given mode or a mode of network indication.

In some embodiments, determining the *t* root sequences corresponding to the *s* preamble sequences includes:
determining *t* root sequence pools corresponding to the *s* preamble sequence pools, one or more preamble sequence pools corresponding to one root sequence pool; and
determining the *t* root sequences based on the *t* root sequence pools.

In some embodiments, determining the *t* root sequence pools corresponding to the *s* preamble sequence pools includes:
obtaining the *t* root sequence pools corresponding to the *s* preamble sequence pools locally, one or more preamble sequence pools corresponding to one given root sequence pool; or
obtaining the *t* root sequence pools corresponding to the *s* preamble sequence pools configured by a network device; or
dividing the *s* preamble sequence pools into *t* preamble sequence pool groups, each preamble sequence pool group includes one or more preamble sequence pools; and generating one root sequence pool for one preamble sequence pool group.

In some embodiments, generating the one root sequence pool for the one preamble sequence pool group includes:
determining a quantity of different roots of each preamble sequence pool in each preamble sequence pool group; and
generating a root sequence pool corresponding to each preamble sequence pool group based on the quantity of different roots of each preamble sequence pool in each preamble sequence pool group.

In some embodiments, determining the *t* root sequences based on the *t* root sequence pools includes:
determining indexes of roots of a target preamble sequence, where the target preamble sequence is a preamble sequence selected from one or more preamble sequence pools corresponding to each root sequence pool;
combining the indexes of the roots of the target preamble sequence into combined data sequentially; and
selecting one root sequence from each root sequence pool based on the combined data to determine the *t* root sequences, where a root sequence selected from a *j*-th root sequence pool is associated with a bit value of a *j*-th combined data, 1 ≤j≤t.

An embodiment of the present application provides a network device, including a memory, a transceiver and a processor;
the memory is used for storing a computer program; the transceiver is used for receiving and transmitting data under control of the processor; and the processor is used for reading the computer program in the memory and performing the following operations:
receiving *t* root sequences and *s* preamble sequences, where the metadata includes s data segments, each data segment corresponds to one preamble sequence, one or more preamble sequences correspond to one root sequence, and both *t* and *s* are positive integers.

In some embodiments, after receiving the *t* root sequences and the *s* preamble sequences, the operations further include:
taking out sequences with different roots from a root sequence pool and performing correlation operations with the *t* root sequences respectively to obtain bit values of roots;
taking out a corresponding root from a preamble sequence pool corresponding to each data segment based on the bit values of roots and performing correlation operations with each preamble sequence to obtain a bit value of each data segment; and
sequentially cascading the bit value of each data segment to obtain a bit value of the metadata.

An embodiment of the present application provides an apparatus for metadata transmission, including:
a determining module, used for determining *s* preamble sequences carrying metadata, and determining *t* root sequences corresponding to the *s* preamble sequences, where the metadata includes *s* data segments, each data segment corresponds to one preamble sequence, one or more preamble sequences correspond to one root sequence, and both *t* and *s* are positive integers; and
a transmitting module, used for transmitting the *s* preamble sequences and the *t* root sequences.

In some embodiments, the determining module includes an obtaining sub-module, a first determining sub-module and a second determining sub-module;
the obtaining sub-module is used for obtaining the *s* data segments of the metadata;
the first determining sub-module is used for determining a preamble sequence pool corresponding to each data segment, to obtain s preamble sequence pools; and
the second determining sub-module is used for determining the s preamble sequences based on the s preamble sequence pools.

In some embodiments, the first determining sub-module includes:
a first obtaining unit, used for obtaining the preamble sequence pool corresponding to each data segment locally, where all preamble sequences in the preamble sequence pool corresponding to each data segment are given preamble sequences; or
a second obtaining unit, used for obtaining the preamble sequence pool corresponding to each data segment configured by a network device; or
a first generating unit, used for generating a corresponding preamble sequence pool for each data segment.

In some embodiments, the first determining sub-module is used for:
selecting one preamble sequence from the preamble sequence pool corresponding to each data segment, and determining the s preamble sequences, where a preamble sequence selected from a preamble sequence pool corresponding to an i-th data segment is associated with a bit value of the i-th data segment, 1≤i≤s.

In some embodiments, the s data segments of the metadata are obtained in a given mode or a mode of network indication.

In some embodiments, the determining module includes a third determining sub-module and a fourth determining sub-module;
the third determining sub-module is used for determining *t* root sequence pools corresponding to the s preamble sequence pools, one or more preamble sequence pools corresponding to one root sequence pool; and
the fourth determining sub-module is used for determining the *t* root sequences based on the *t* root sequence pools.

In some embodiments, the third determining sub-module includes:
a third obtaining unit, used for obtaining the *t* root sequence pools corresponding to the *s* preamble sequence pools locally, one or more preamble sequence pools corresponding to one given root sequence pool; or
a fourth obtaining unit, used for obtaining the *t* root sequence pools corresponding to the s preamble sequence pools configured by a network device; or
a dividing unit and a second generating unit, where the dividing unit is used for dividing the s preamble sequence pools into *t* preamble sequence pool groups, each preamble sequence pool group includes one or more preamble sequence pools; and the second generating unit is used for generating one root sequence pool for one preamble sequence pool group.

In some embodiments, the second generating unit includes a determining subunit and a generating subunit;
the determining subunit is used for determining a quantity of different roots of each preamble sequence pool in each preamble sequence pool group; and
the generating subunit is used for generating a root sequence pool corresponding to each preamble sequence pool group based on the quantity of different roots of each preamble sequence pool in each preamble sequence pool group.

In some embodiments, the fourth determining sub-module includes a first determining unit, a combining unit and a second determining unit;
the first determining unit is used for determining indexes of roots of a target preamble sequence, where the target preamble sequence is a preamble sequence selected from one or more preamble sequence pools corresponding to each root sequence pool;
the combining unit is used for combining the indexes of the roots of the target preamble sequence into combined data sequentially; and
a second determining unit is used for selecting one root sequence from each root sequence pool based on the combined data to determine the *t* root sequences, where a root sequence selected from a *j*-th root sequence pool is associated with a bit value of a *j*-th combined data, 1 ≤j≤t.

An embodiment of the present application provides an apparatus for metadata transmission, including:
a receiving module, used for receiving *t* root sequences and *s* preamble sequences, where the metadata includes *s* data segments, each data segment corresponds to one preamble sequence, one or more preamble sequences correspond to one root sequence, and both *t* and *s* are positive integers.

In some embodiments, the apparatus for metadata transmission further includes a first processing module, a second processing module and a third processing module;
the first processing module is used for taking out sequences with different roots from a root sequence pool and performing correlation operations with the *t* root sequences respectively to obtain bit values of roots;
the second processing module is used for taking out a corresponding root from a preamble sequence pool corresponding to each data segment based on the bit values of roots and performing correlation operations with each preamble sequence to obtain a bit value of each data segment; and
the third processing module is used for cascading the bit value of each data segment sequentially to obtain a bit value of the metadata.

An embodiment of the present application further provides a processor-readable storage medium storing a computer program that causes a processor to perform any of the methods for metadata transmission described above.

An embodiment of the present application further provides a computer-readable storage medium storing a computer program that causes a computer to perform any of the methods for metadata transmission described above.

An embodiment of the present application further provides a communication device-readable storage medium storing a computer program that causes a communication device to perform any of the methods for metadata transmission described above.

An embodiment of the present application further provides a chip product-readable storage medium storing a computer program that causes a chip product to perform any of the methods for metadata transmission described above.

In the methods and apparatuses for metadata transmission and the storage medium provided in the embodiment of the present application, the reception complexity is reduced by transmitting the roots of the preamble sequences separately.

### BRIEF DESCRIPTION OF THE DRAWINGS

In order to more clearly illustrate the technical solutions disclosed in the embodiments of the present application, the drawings used in the descriptions of the embodiments are briefly described below. The drawings in the following description are some embodiments of the present application, and other drawings may be obtained according to these drawings without any creative work for those of ordinary skill in the art.
FIG. 1 is a first schematic flowchart of a method for metadata transmission according to an embodiment of the present application;
FIG. 2 is a schematic logic flowchart of metadata transmission according to an embodiment of the present application;
FIG. 3 is a schematic principle diagram of segmenting metadata according to an embodiment of the present application;
FIG. 4 is a second schematic flowchart of a method for metadata transmission according to an embodiment of the present application;
FIG. 5 is a schematic structural diagram of a terminal according to an embodiment of the present application;
FIG. 6 is a schematic structural diagram of a network device according to an embodiment of the present application;
FIG. 7 is a first schematic structural diagram of an apparatus for metadata transmission according to an embodiment of the present application; and
FIG. 8 is a second schematic structural diagram of an apparatus for metadata transmission according to an embodiment of the present application.

### DETAILED DESCRIPTION

In order to illustrate the objectives, solutions and advantages of the present application clearly, the solutions in the embodiments of the present application are clearly and completely described in the following in conjunction with the accompanying drawings in the present application. These embodiments are a part of the embodiments of the present application, and not all of the embodiments. All other embodiments obtained by a person of ordinary skill in the art based on the embodiments of the present application without creative work are within the scope of the present application.

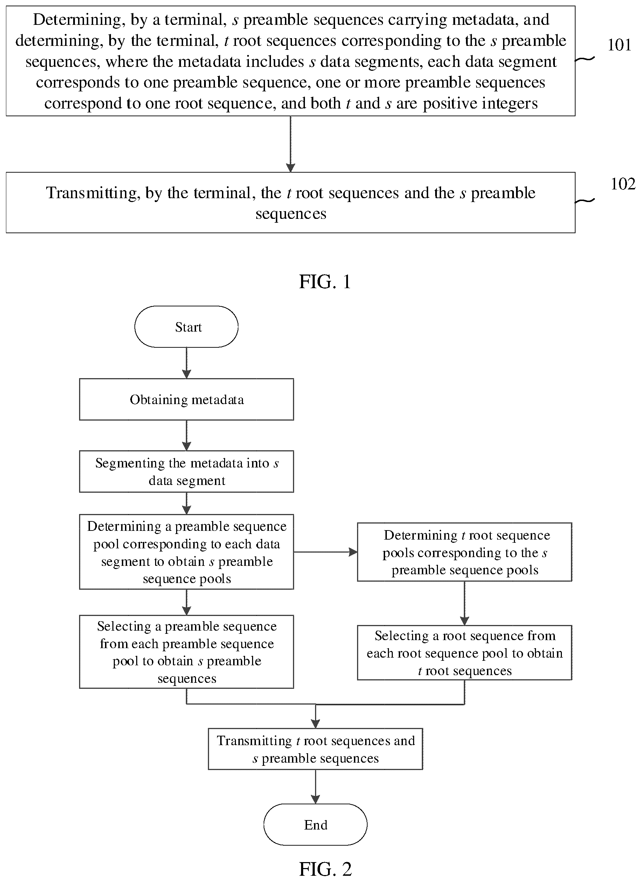

FIG. 1 is a first schematic flowchart of a method for metadata transmission according to an embodiment of the present application. As shown in FIG. 1, the method for metadata transmission according to an embodiment of the present application may be performed by a terminal, such as a mobile phone, a wireless sensor, etc. The method includes the following steps.

Step 101, determining, by a terminal, s preamble sequences carrying metadata, and determining, by the terminal, *t* root sequences corresponding to the *s* preamble sequences, where the metadata includes s data segments, each data segment corresponds to one preamble sequence, one or more preamble sequences correspond to one root sequence, and both *t* and *s* are positive integers.

In an embodiment, FIG. 2 is a schematic logic flowchart of metadata transmission according to an embodiment of the present application. As shown in FIG. 2, before transmitting, by the terminal, the *t* root sequences and the s preamble sequences, the method further includes: determining, by the terminal, the s preamble sequences carrying the metadata.

In some embodiments, determining, by the terminal, the s preamble sequences carrying the metadata includes:
obtaining, by the terminal, the s data segments of the metadata;
determining, by the terminal, a preamble sequence pool corresponding to each data segment to obtain s preamble sequence pools; and
determining, by the terminal, the s preamble sequences based on s metadata segments and the s preamble sequence pools.

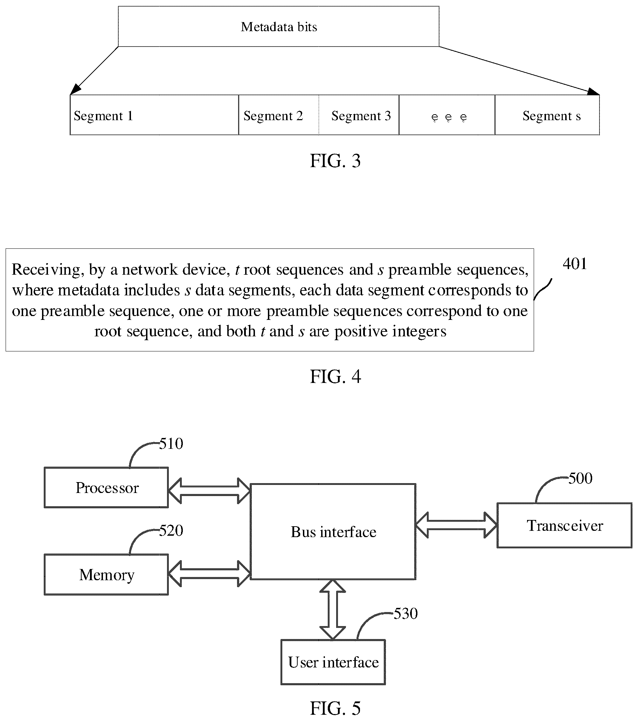

In an embodiment, FIG. 3 is a schematic principle diagram of segmenting metadata according to an embodiment of the present application. As shown in FIG. 3, before transmitting the *t* root sequences and s preamble sequences, the terminal may first segments bits of the metadata into s data segments. The segmentation mode may be a given mode or a mode obtained from a network signaling, and s may be 1 or an integer greater than or equal to 2.

The number of bits of each data segment may be the same or different.

After the terminal segments the metadata into s data segments, the terminal determines the preamble sequence pool corresponding to each data segment and obtains s preamble sequence pools.

It should be noted that in case that s has a value of 1, the terminal does not segment the metadata.

In some embodiments, the preamble sequence pool corresponding to each data segment is pre-configured, for example, the preamble sequence pool corresponding to each data segment is stored locally in the terminal. The terminal obtains the preamble sequence pool corresponding to each data segment locally, where all preamble sequences in the preamble sequence pool corresponding to each data segment are given preamble sequences.

In some embodiments, the preamble sequence pool corresponding to each data segment is configured by a network device, and the terminal obtains the preamble sequence pool corresponding to each data segment configured by the network device, where all the preamble sequences in the preamble sequence pool corresponding to each data segment are preamble sequences configured by the network device.

In some embodiments, the preamble sequence pool corresponding to each data segment is generated by the terminal itself.

For example, for the *i*-th data segment, 2^{Ni} preamble sequences are constructed based on a bit number Ni of the data segment. By carrying Ni bits of the *i*-th data segment on these 2^{Ni} preamble sequences, a set including these 2^{Ni} preamble sequences constitutes a preamble sequence pool for the *i*-th data segment.

After determining the *s* preamble sequence pools, the terminal determines the *s* preamble sequences based on the *s* preamble sequence pools.

In some embodiments, the terminal selects one preamble sequence from the preamble sequence pool corresponding to each data segment respectively, and determines the *s* preamble sequences.

In some embodiments, the preamble sequence selected from the preamble sequence pool corresponding to the *i*-th data segment is associated with a bit value of the *i*-th data segment, 1 ≤i≤s.

For example, the bit value of the *i*-th data segment is in one-to-one correspondence with an index of the preamble sequence in the preamble sequence pool, and the correspondence may be stored in the form of a table. The correspondence may be a given correspondence or may be configured by the network device.

For another example, the preamble sequence selected from the preamble sequence pool corresponding to the *i*-th data segment is the preamble sequence indexed by I in the preamble sequence pool corresponding to the *i*-th data segment, where I is a decimal value corresponding to the *i*-th data segment.

In an embodiment, FIG. 2 is a schematic logic flowchart of metadata transmission according to an embodiment of the present application. As shown in FIG. 2, before transmitting, by the terminal, the *t* root sequences and *s* preamble sequences, the method further includes: determining, by the terminal, the *t* root sequences corresponding to the s preamble sequences.

In some embodiments, determining, by the terminal, the *t* root sequences corresponding to the s preamble sequences, includes:
determining, by the terminal, *t* root sequence pools corresponding to *s* preamble sequence pools, one or more preamble sequence pools corresponding to one root sequence pool; and
determining, by the terminal, the *t* root sequences based on the *t* root sequence pools.

In some embodiments, the root sequence pool corresponding to one or more preamble sequence pools is pre-configured. For example, the root sequence pool corresponding to one or more preamble sequence pools is stored locally in the terminal. The terminal obtains the root sequence pool corresponding to one or more preamble sequence pools locally, where all the root sequences in each root sequence pool are given root sequences.

In some embodiments, the root sequence pool corresponding to one or more preamble sequence pools is configured by the network device, and the terminal obtains the root sequence pool corresponding to one or more preamble sequence pools configured by the network device, where all the root sequences in each root sequence pool are root sequences configured by the network device.

In some embodiments, the root sequence pool corresponding to one or more preamble sequence pools is generated by the terminal itself, and the steps for the terminal to generate the root sequence pool are as follows.

First, the terminal segments the *s* preamble sequence pools into *t* preamble sequence pool groups, where each preamble sequence pool group includes one or more preamble sequence pools.

Then, the terminal generates one root sequence pool for each preamble sequence pool group.

In some embodiments, the steps for the terminal to generate one root sequence pool for one preamble sequence pool group are as follows.

First, the terminal determines a quantity of different roots of each preamble sequence pool in each preamble sequence pool group.

Then, the terminal generates a root sequence pool corresponding to each preamble sequence pool group based on the quantity of different roots of each preamble sequence pool in each preamble sequence pool group.

For example, the *j*-th preamble sequence pool group includes *r* preamble sequence pools, and the quantity of different roots of the preamble sequences in the *k*-th preamble sequence pool is Mk. Then, after the indexes of the r preamble sequence pools are combined sequentially together, there are M1*M2*... *Mr combinations in total. The quantity of different roots of the preamble sequences in the *j*-th preamble sequence pool group is M1*M2*...*Mr. The terminal generates M1*M2*...*Mr root sequences, and carries root information of all preamble sequences in the *j*-th preamble sequence pool group on these M1*M2*...*Mr root sequences. The set including these M1*M2*... *Mr root sequences constitutes a root sequence pool, that is, the *j*-th root sequence pool corresponding to the *j*-th preamble sequence pool group.

In an embodiment, both the root sequences in the root sequence pool and the preamble sequences in the preamble sequence pool in the embodiments of the present application may include one or more of the following sequences:
a Zadoff-chu sequence;
a Frank sequence;
a Golomb multiphase sequence; or
a Chirp sequence.

It should be noted that a length of the root sequence in the root sequence pool may be the same as or different from a length of the preamble sequence in the preamble sequence pool.

In some embodiments, the steps for the terminal to determine the *t* root sequences based on the *t* root sequence pools are as follows.

First, the terminal determines indexes of roots of a target preamble sequence, where the target preamble sequence is a preamble sequence selected from one or more preamble sequence pools corresponding to each root sequence pool.

Then, the terminal combines the indexes of the roots of the target preamble sequence into combined data sequentially.

Finally, the terminal selects one root sequence from each root sequence pool based on the combined data to determine the *t* root sequences.

For example, the first preamble sequence pool group includes 2 preamble sequence pools, and the first preamble sequence pool group corresponds to the first root sequence pool. A root of the preamble sequence selected from the first preamble sequence pool is 78 and a corresponding index is 01; and a root of the preamble sequence selected from the second preamble sequence pool is 98 and a corresponding index is 11. The combined data combined sequentially is 0111. The terminal selects one root sequence from the first root sequence pool based on the combined data 0111.

In some embodiments, the root sequence selected from a *j*-th root sequence pool is associated with a bit value of a *j*-th combined data, 1≤j≤t.

For example, the bit value of the *j*-th combined data is in one-to-one correspondence with the index of the root sequence in the root sequence pool, and the correspondence may be stored in the form of a table. The correspondence may be a given correspondence or may be configured by the network device.

For another example, the root sequence selected from the *j*-th root sequence pool is a root sequence indexed by J in the *j*-th root sequence pool, where J is a decimal value corresponding to the *j*-th combined data.

After the terminal transmits the *t* root sequences and the s preamble sequences, the network device receives the *t* root sequences and the s preamble sequences.

Step 102, after determining, by the terminal, the s preamble sequences carrying the metadata and the *t* root sequences corresponding to the s preamble sequences, transmitting, by the terminal, the *t* root sequences and the *s* preamble sequences.

After receiving the *t* root sequences and the s preamble sequences, the network device performs the following steps.
the network device takes out sequences with different roots from a root sequence pool and performs correlation operations with the *t* root sequences respectively to obtain bit values of roots;
the network device takes out a corresponding root from a preamble sequence pool corresponding to each data segment based on the bit values of roots and performs correlation operations with each preamble sequence to obtain a bit value of each data segment; and
the network device sequentially cascades the bit value of each data segment to obtain a bit value of the metadata.

In the method for metadata transmission provided by the embodiment of the present application, the reception complexity is reduced by transmitting the roots of the preamble sequences separately.

The above method is further explained below by taking *t* being equal to 1, s being equal to 1, and both the root sequence and the preamble sequence being ZC sequences as an example.
(1) Bits of the metadata are segmented.

The bits of the metadata have N bits in total, which are segmented into s segments based on a given mode or a mode obtained from network signaling. The number of bits contained in each segment is N1, N2, ..., Ns, which have a sum of N. In particular, when s=1, Ns=N1=N.

The bits of the metadata are N=16 bits and are not segmented, that is, s=1.

(2) A preamble sequence pool is constructed based on the number of bits of each segmented metadata bit.

For the *i*-th segment, 2^{Ni} ZC sequences are constructed based on the number Ni of segmented bits to carry Ni bits, and a set including these 2^{Ni} ZC sequences constitutes the preamble sequence pool for the i-th segment.

2¹⁶=65536 preamble sequences are constructed to constitute a preamble sequence pool. An LTE/NR preamble sequence with a length of 839 is used, 400 roots are taken, and the number of cyclic shifts (Ncs) is 4 for each root, then 83600 (400*floor(839/4)=83600) preamble sequences may be obtained. The 1st to 65536-th preamble sequences are used, that is, the bit 0000 0000 0000 0000 of the metadata corresponds to the 1st sequence, and 1111 1111 1111 1111 corresponds to the 65536-th sequence.

(3) A root sequence pool is constructed based on the preamble sequence pool.

Roots of the ZC sequences in the preamble sequence pool for the *i*-th segment are determined. The quantity of different roots is Mi. *s* indexes are combined sequentially together, and there are M1*M2*...*Ms combinations. The ZC sequences with a total number of M1*M2*... *Ms are constructed to carry root information. A set including these M1*M2*... *Ms ZC sequences constitutes a root sequence pool. A length of the ZC sequence in the root sequence pool may be the same as or different from a length of the ZC sequence in the preamble sequence pool.

It may be learned that there are 400 roots in total of the preamble sequences based on the 65536 preamble sequences selected by the terminal. Short ZC sequences are used to transmit the root information since the quantity of roots is much smaller than the quantity of preamble sequences, which may also meet the required performance requirements. That is, the root sequence error detection probability is smaller than the preamble sequence error detection probability by one order of magnitude. An NR preamble sequence with a length of 139 is used, and 12 roots are taken. For each root, Ncs is 4, then 408 (12*floor(139/4)=408) preamble sequences may be obtained, and the 1st to 400th sequences are used.

(4) Preamble sequences of each segment are determined based on the bit value of each segmented metadata bit.

For the *i*-th segment of the metadata bit, the terminal selects a corresponding ZC sequence from the *i*-th preamble sequence pool based on a value of a bit string in the *i*-th segment. Therefore, *s* preamble sequences may be obtained.

The terminal selects a corresponding ZC sequence from the preamble sequence pool based on the value of its own 16-bit metadata. For example, in case that the 16-bit metadata of the terminal is 0000 0000 0000 0001, the terminal selects the second sequence as the preamble sequence.

(5) The root sequence is determined based on the determined one or more preamble sequences.

The terminal may directly obtain a root of the determined i-th preamble sequence based on the determined *i*-th preamble sequence, combine the indexes of the s roots sequentially together, and select a corresponding ZC sequence from the root sequence pool based on the combined value to obtain the root sequence.

The terminal selects a root sequence from the root sequence pool based on the root of the preamble sequence. For example, in case that the terminal selects the second sequence as the preamble sequence and the value of its root is 10, the terminal selects a ZC sequence corresponding to 10 from the root sequence pool as the root sequence.

(6) The terminal transmits the root sequence and one or more preamble sequences.

At a receiver end, the base station first receives a root sequence signal and detects the multiple roots used by all the terminals. Assuming that 300 terminals use 100 different roots, the base station uses 12 sequences to perform correlation detection with a length of 139, and may obtain values of the 100 roots. The base station receives a preamble sequence signal and uses the 100 roots to perform correlation detection with a length of 839 to obtain 300 preamble sequences. Therefore, a total detection complexity of the base station is 100 times of correlation detection with a length of 839 plus 12 times correlation detection with a length of 139, which is much lower than 400 (the total quantity of roots corresponding to 65536 sequences) times correlation detection with a length of 839. From the perspective of detection performance, detection is easily successful due to small number of root sequences. After a set of the roots is obtained, it may avoid erroneous judgments as other roots, the performance is better and a better system gain is obtained.

The above method is further explained below by taking *t* being equal to 1, *s* being equal to 2, and both the root sequence and the preamble sequence being ZC sequences as an example.
(1) Bits of the metadata are segmented.

The bits of the metadata have N bits in total, which are segmented into s segments based on a given mode or a mode obtained from network signaling. The number of bits contained in each segment is N1, N2, ..., Ns, which have a sum of N.

In case that the bits of the metadata are 16 bits and *s* is 2, before each metadata transmission, the terminal takes the first 8 bits of the metadata as a group and the last 8 bits of the metadata as a group, that is, N1=8, N2=8, and N=16.

(2) A preamble sequence pool is constructed based on the number of bits of each segmented metadata bit.

For the *i*-th segment, 2^{Ni} ZC sequences are constructed based on the number Ni of segmented bits to carry Ni bits, and a set including these 2^{Ni} ZC sequences constitutes the preamble sequence pool for the *i*-th segment.

First, 256 (2⁸=256) preamble sequences are constructed, and a preamble sequence pool for the first segment and a preamble sequence pool for the second segment are obtained respectively. The two preamble sequence pools are the same. The length of the preamble sequence is 397, and 4 roots are taken. Ncs is 6 for each root, then 264 (4*floor(397/6)=264) preamble sequences may be obtained. The first 256 sequences of the 264 sequences are used, that is, the first root cyclic shift is 0, the second root cyclic shift is 6, ..., the fourth root cyclic shift is 343, and the 8 bits 0000 0000 in the bits of the metadata correspond to the first sequence, and 1111 1111 corresponds to the 256-th sequence.

(3) A root sequence pool is constructed based on the preamble sequence pool.

Roots of the ZC sequences in the preamble sequence pool for the *i*-th segment are determined. The quantity of different roots is Mi. *s* indexes are combined sequentially together, and there are M1*M2*...*Ms combinations. The ZC sequences with a total number of M1*M2*... *Ms are constructed to carry root information. A set including these M1*M2*... *Ms ZC sequences constitutes a root sequence pool. A length of the ZC sequence in the root sequence pool may be the same as or different from a length of the ZC sequence in the preamble sequence pool.

M1=4, M2=4, and there are 16 combinations in total. A root sequence pool is constructed, a sequence with a length of 139 is used, 1 root is taken and Ncs is taken as 8, then 17 (1*floor(139/8)=17) sequences may be obtained, and the 1st to 16-th sequences are used to obtain a root sequence pool, 00 00 corresponds to the 1st combination, and 11 11 corresponds to the 16-th combination.

(4) Preamble sequences of each segment are determined based on the bit value of each segmented metadata bit.

For the *i*-th segment of the metadata bit, the terminal selects a corresponding ZC sequence from the *i*-th preamble sequence pool based on a value of a bit string in the *i*-th segment. Therefore, *s* preamble sequences may be obtained.

A first preamble sequence is determined based on the first 8 bits of the metadata. For example, in case that the first 8 bits of the metadata are 0000 0001, then the preamble sequence for the first segment is selected as a second sequence in the first preamble sequence pool. A second preamble sequence is determined based on the last 8 bits of the metadata. For example, in case that the last 8 bits of the metadata are 0000 0011, the preamble sequence for the second segment is selected as a fourth sequence in the second preamble sequence pool.

(5) The root sequence is determined based on the determined one or more preamble sequences.

The terminal may directly obtain a root of the determined i-th preamble sequence based on the determined i-th preamble sequence, combine the indexes of the s roots sequentially together, and select a corresponding ZC sequence from the root sequence pool based on the combined value to obtain the root sequence.

The terminal selects a root sequence from the root sequence pool based on the roots of the two preamble sequences. For example, in case that the value of a root of the preamble sequence for the first segment is 1 and the value of a root of the preamble sequence for the second segment is 3, the terminal selects a sequence 10 corresponding to the combination of "1" and "3" from the root sequence pool as the root sequence.

(6) The terminal transmits the root sequence and one or more preamble sequences.

At a receiver end, the base station first receives a root sequence signal and detects the multiple roots used by all the terminals. Assuming that 300 terminals use 10 different root combinations. The base station may use one sequence to perform correlation detection with a length of 139 to obtain the values of the 10 root combinations. The base station receives a first preamble sequence signal, respectively uses a first root value among the 10 root combinations to perform correlation detection with a length of 397 to obtain 30 first preamble sequences. The base station receives a second preamble sequence signal, respectively uses a second root value among the 10 root combinations to perform correlation detection with a length of 397, to obtain 10 second preamble sequences. The base station obtains 300 (30*10=300) various combinations of the first preamble sequence and the second preamble sequence. Therefore, the total detection complexity of the base station is 1 correlation detection with a length of 139 plus 10 correlation detection with a length of 397 plus 10 correlation detection with a length of 397, and the detection complexity is significantly reduced. From the perspective of the detection performance, the root sequence is easier to detect successfully because of its small number. After a set of the roots is obtained, it may avoid erroneous judgments as other roots, the performance is better and a better system gain is obtained.

FIG. 4 is a second schematic flowchart of a method for metadata transmission according to an embodiment of the present application. As shown in FIG. 4, the method for metadata transmission according to an embodiment of the present application may be performed by a network device, such as a base station, etc. The method includes the following steps.

Step 401, receiving, by a network device, *t* root sequences and s preamble sequences, where metadata includes s data segments, each data segment corresponds to one preamble sequence, one or more data segments correspond to one root sequence, and both *t* and *s* are positive integers.

In some embodiments, after receiving, by the network device, the *t* root sequences and the *s* preamble sequences, the method further includes:
taking out, by the network device, sequences with different roots from a root sequence pool and performing correlation operations with the *t* root sequences respectively to obtain bit values of roots;
taking out, by the network device, a corresponding root from a preamble sequence pool corresponding to each data segment based on the bit values of roots and performing correlation operations with each preamble sequence to obtain a bit value of each data segment; and
cascading, by the network device, the bit value of each data segment sequentially to obtain a bit value of the metadata.

The method for metadata transmission performed by the network device provided by the embodiments of the present application may refer to the above-mentioned embodiments of the method for metadata transmission performed by the terminal, and may achieve the same effects. The same parts and beneficial effects as the corresponding method embodiments are not described in detail.

FIG. 5 is a schematic structural diagram of a terminal according to an embodiment of the present application. As shown in FIG. 5, the terminal includes a memory 520, a transceiver 500, and a processor 510, in which:
the memory 520 is used for storing a computer program; the transceiver 500 is used for receiving and transmitting data under control of the processor 510; and the processor 510 is used for reading the computer program in the memory 520 and performing the following operations:
determining s preamble sequences carrying metadata, and determining *t* root sequences corresponding to the s preamble sequences, where the metadata includes s data segments, each data segment corresponds to one preamble sequence, one or more preamble sequences correspond to one root sequence, and both *t* and *s* are positive integers; and
transmitting the s preamble sequences and the *t* root sequences.

In an embodiment, the transceiver 500 is used for receiving and transmitting data under control of the processor 510.

In FIG. 5, a bus architecture may include any number of interconnected buses and bridges, which are linked together through various circuits of one or more processors represented by processor 510 and one or more memories represented by the memory 520. The bus architecture may also link together various other circuits, such as peripherals, voltage regulators, and power management circuits, which are well known in the art, and therefore will not be further described in the present application. The bus interface provides an interface. The transceiver 500 may be multiple elements, i.e., including a transmitter and a receiver, units for providing communication with various other devices over transmission media including wireless channels, wired channels, fiber optic cables, and the like. For different user equipment, the user interface 530 may also be an interface capable of externally or internally connecting the required equipment, and the connected equipment includes, but not limited to, a small keypad, a display, a speaker, a microphone, a joystick, and the like.

The processor 510 is responsible for managing the bus architecture and general processing, and the memory 520 may store data used by the processor 510 when performing operations.

In some embodiments, the processor 510 may be a central processing unit (CPU), an application specific integrated circuit (ASIC), a field-programmable gate array (FPGA), or a complex programmable logic device (CPLD), the processor may also use a multi-core architecture.

The processor is configured to perform any of the methods performed by the terminal in the embodiments of the present application based on the obtained executable instructions by invoking the computer program stored in the memory. The processor and memory may also be physically separated.

In some embodiments, determining the s preamble sequences carrying the metadata includes:
obtaining the s data segments of the metadata;
determining a preamble sequence pool corresponding to each data segment to obtain s preamble sequence pools; and
determining the s preamble sequences based on the s preamble sequence pools.

In some embodiments, determining the preamble sequence pool corresponding to each data segment includes:
obtaining the preamble sequence pool corresponding to each data segment locally, where all preamble sequences in the preamble sequence pool corresponding to each data segment are given preamble sequences; or
obtaining the preamble sequence pool corresponding to each data segment configured by a network device; or
generating a corresponding preamble sequence pool for each data segment.

In some embodiments, determining the s preamble sequences based on the s preamble sequence pools includes:
selecting one preamble sequence from the preamble sequence pool corresponding to each data segment, and determining the s preamble sequences, where a preamble sequence selected from a preamble sequence pool corresponding to an *i*-th data segment is associated with a bit value of the *i*-th data segment, 1≤i≤s.

In some embodiments, the *s* data segments of the metadata are obtained in a given mode or a mode of network indication.

In some embodiments, determining the *t* root sequences corresponding to the *s* preamble sequences includes:
determining *t* root sequence pools corresponding to the *s* preamble sequence pools, one or more preamble sequence pools corresponding to one root sequence pool; and
determining the *t* root sequences based on the *t* root sequence pools.

In some embodiments, determining the *t* root sequence pools corresponding to the *s* preamble sequence pools includes:
obtaining the *t* root sequence pools corresponding to the *s* preamble sequence pools locally, one or more preamble sequence pools corresponding to one given root sequence pool; or
obtaining the *t* root sequence pools corresponding to the *s* preamble sequence pools configured by a network device; or
dividing the *s* preamble sequence pools into *t* preamble sequence pool groups, each preamble sequence pool group includes one or more preamble sequence pools; and generating one root sequence pool for one preamble sequence pool group.

In some embodiments, generating the one root sequence pool for the one preamble sequence pool group includes:
determining a quantity of different roots of each preamble sequence pool in each preamble sequence pool group; and
generating a root sequence pool corresponding to each preamble sequence pool group based on the quantity of different roots of each preamble sequence pool in each preamble sequence pool group.

In some embodiments, determining the *t* root sequences based on the *t* root sequence pools includes:
determining indexes of roots of a target preamble sequence, where the target preamble sequence is a preamble sequence selected from one or more preamble sequence pools corresponding to each root sequence pool;
combining the indexes of the roots of the target preamble sequence into combined data sequentially; and
selecting one root sequence from each root sequence pool based on the combined data to determine the *t* root sequences, where a root sequence selected from a *j*-th root sequence pool is associated with a bit value of a *j*-th combined data, 1 ≤j≤t.

It should be noted here that the above-mentioned terminal according to the embodiments of the present application may implement all the method steps implemented by the above-mentioned method embodiments performed by the terminal, and may achieve the same effect. The same parts and beneficial effects as the same method embodiments are not repeated in the present application.

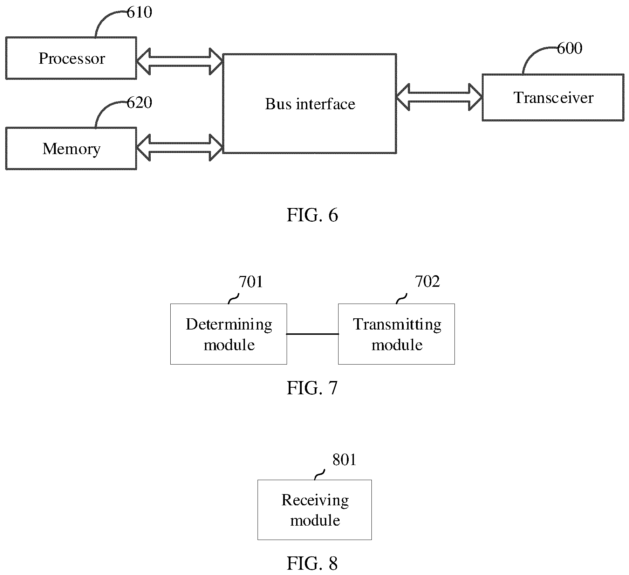

FIG. 6 is a schematic structural diagram of a network device according to an embodiment of the present application. As shown in FIG. 6, the network device includes a memory 620, a transceiver 600, and a processor 610, in which:
the memory 620 is used for storing a computer program; the transceiver 600 is used for transmitting and receiving data under control of the processor 610; and the processor 610 is used for reading the computer program in the memory 620 and performing the following operations:
receiving *t* root sequences and s preamble sequences, where the metadata includes s data segments, each data segment corresponds to one preamble sequence, one or more preamble sequences correspond to one root sequence, and both *t* and *s* are positive integers.

In an embodiment, the transceiver 600 is used for receiving and transmitting data under control of the processor 610.

In FIG. 6, a bus architecture may include any number of interconnected buses and bridges, which are linked together through various circuits of one or more processors represented by processor 610 and one or more memories represented by the memory 620. The bus architecture may also link together various other circuits, such as peripherals, voltage regulators, and power management circuits, which are well known in the art, and therefore will not be further described in the present application. The bus interface provides an interface. The transceiver 600 may be multiple elements, i.e., including a transmitter and a receiver, units for providing communication with various other devices over transmission media including wireless channels, wired channels, fiber optic cables, and the like. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), the processor may also use a multi-core architecture.

In some embodiments, after receiving the *t* root sequences and the *s* preamble sequences, the operations further include:
taking out sequences with different roots from a root sequence pool and performing correlation operations with the *t* root sequences respectively to obtain bit values of roots;
taking out a corresponding root from a preamble sequence pool corresponding to each data segment based on the bit values of roots and performing correlation operations with each preamble sequence to obtain a bit value of each data segment; and
cascading the bit value of each data segment sequentially to obtain a bit value of the metadata.

In an embodiment, the above-mentioned network device according to the embodiments of the present application may implement all the method steps implemented by the above-mentioned method embodiments performed by the network device, and may achieve the same effect. The same parts and beneficial effects as the same method embodiments are not repeated in the present application.

FIG. 7 is a first schematic structural diagram of an apparatus for metadata transmission according to an embodiment of the present application. As shown in FIG. 7, the apparatus for metadata transmission according to an embodiment of the present application includes a determining module 701 and a transmitting module 702, where
the determining module 701 is used for determining s preamble sequences carrying metadata, and determining *t* root sequences corresponding to the s preamble sequences, where the metadata includes *s* data segments, each data segment corresponds to one preamble sequence, one or more preamble sequences correspond to one root sequence, and both *t* and *s* are positive integers; and the transmitting module 702 is used for transmitting the *s* preamble sequences and the *t* root sequences.

In some embodiments, the determining module includes an obtaining sub-module, a first determining sub-module and a second determining sub-module;
the obtaining sub-module is used for obtaining the *s* data segments of the metadata;
the first determining sub-module is used for determining a preamble sequence pool corresponding to each data segment, to obtain s preamble sequence pools; and
the second determining sub-module is used for determining the s preamble sequences based on the s preamble sequence pools.

In some embodiments, the first determining sub-module includes
a first obtaining unit, used for obtaining the preamble sequence pool corresponding to each data segment locally, where all preamble sequences in the preamble sequence pool corresponding to each data segment are given preamble sequences; or
a second obtaining unit, used for obtaining the preamble sequence pool corresponding to each data segment configured by a network device; or
a first generating unit, used for generating a corresponding preamble sequence pool for each data segment.

In some embodiments, the first determining sub-module is used for:
selecting one preamble sequence from the preamble sequence pool corresponding to each data segment, and determining the s preamble sequences, where a preamble sequence selected from a preamble sequence pool corresponding to an *i*-th data segment is associated with a bit value of the *i*-th data segment, 1≤i≤s.

In some embodiments, the *s* data segments of the metadata are obtained in a given mode or a mode of network indication.

In some embodiments, the determining module includes a third determining sub-module and a fourth determining sub-module;
the third determining sub-module is used for determining *t* root sequence pools corresponding to the *s* preamble sequence pools, one or more preamble sequence pools corresponding to one root sequence pool; and
the fourth determining sub-module is used for determining the *t* root sequences based on the *t* root sequence pools.

In some embodiments, the third determining sub-module includes:
a third obtaining unit, used for obtaining the *t* root sequence pools corresponding to the *s* preamble sequence pools locally, one or more preamble sequence pools corresponding to one given root sequence pool; or
a fourth obtaining unit, used for obtaining the *t* root sequence pools corresponding to the *s* preamble sequence pools configured by a network device; or
a dividing unit and a second generating unit, where the dividing unit is used for dividing the s preamble sequence pools into *t* preamble sequence pool groups, each preamble sequence pool group includes one or more preamble sequence pools; and the second generating unit is used for generating one root sequence pool for one preamble sequence pool group.

In some embodiments, the second generating unit includes a determining subunit and a generating subunit;
the determining subunit is used for determining a quantity of different roots of each preamble sequence pool in each preamble sequence pool group; and
the generating subunit is used for generating a root sequence pool corresponding to each preamble sequence pool group based on the quantity of different roots of each preamble sequence pool in each preamble sequence pool group.

In some embodiments, the fourth determining sub-module includes a first determining unit, a combining unit and a second determining unit;
the first determining unit is used for determining indexes of roots of a target preamble sequence, where the target preamble sequence is a preamble sequence selected from one or more preamble sequence pools corresponding to each root sequence pool;
the combining unit is used for combining the indexes of the roots of the target preamble sequence into combined data sequentially; and
a second determining unit is used for selecting one root sequence from each root sequence pool based on the combined data to determine the *t* root sequences, where a root sequence selected from a *j*-th root sequence pool is associated with a bit value of a *j*-th combined data, 1 ≤j≤t.

In an embodiment, the above-mentioned apparatus for metadata transmission according to the embodiments of the present application may implement all the method steps implemented by the above-mentioned method embodiments performed by the terminal, and may achieve the same effect. The same parts and beneficial effects as the same method embodiments are not repeated in the present application.

FIG. 8 is a second schematic structural diagram of an apparatus for metadata transmission according to an embodiment of the present application. As shown in FIG. 8, the apparatus for metadata transmission according to an embodiment of the present application includes a receiving module 801.

The receiving module 801 is used for receiving *t* root sequences and s preamble sequences, where the metadata includes s data segments, each data segment corresponds to one preamble sequence, one or more preamble sequences correspond to one root sequence, and both *t* and *s* are positive integers.

In some embodiments, the apparatus for metadata transmission further includes a first processing module, a second processing module and a third processing module;
the first processing module is used for taking out sequences with different roots from a root sequence pool and performing correlation operations with the *t* root sequences respectively to obtain bit values of roots;
the second processing module is used for taking out a corresponding root from a preamble sequence pool corresponding to each data segment based on the bit values of roots and performing correlation operations with each preamble sequence to obtain a bit value of each data segment; and
the third processing module is used for cascading the bit value of each data segment sequentially to obtain a bit value of the metadata.

In an embodiment, the above-mentioned apparatus for metadata transmission according to the embodiments of the present application may implement all the method steps implemented by the above-mentioned method embodiments performed by the network device, and may achieve the same effect. The same parts and beneficial effects as the same method embodiments are not repeated in the present application.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

An embodiment of the present application further provides a computer-readable storage medium storing a computer program that causes a computer to perform any of the methods for metadata transmission described above.

In an embodiment, the above-mentioned computer-readable storage medium according to the embodiments of the present application may implement all the method steps implemented by the above-mentioned method embodiments, and may achieve the same effect. The same parts and beneficial effects as the same method embodiments are not repeated here.

It should be noted that the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

It should also be noted that the terms "first", "second", etc. in the embodiments of the present application are used to distinguish similar objects and are not used to describe a specific order or sequence. It should be understood that the terms used in this way may be interchanged in appropriate circumstances, so that the embodiments disclosed herein may be implemented in order other than those illustrated or described herein, and the objects distinguished by "first" and "second" are generally of the same type, without limiting the number of the objects, for example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device in the embodiments of the present application may be a device that provides voice and/or data connectivity to a user, a handheld device with a wireless connection function, or other processing device connected to a wireless modem. In different systems, the names of the terminal device may be different. For example, in the 5G system, the terminal device may be called as user equipment (UE). A radio terminal device may communicate with one or more core networks (CN) via a radio access network (RAN), and the radio terminal device may be a mobile terminal device, such as a mobile phone (or cellular phone) and computers with mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device in the embodiments of the present application may be a base station, and the base station may include multiple cells providing services for the terminal. Depending on the specific application, the network device may also be called an access point, or may be a device in the access network that communicates with radio terminal through one or more sectors on the air interface, or other names. Network device may be used to exchange received air frames with Internet Protocol (IP) packets, and act as a router between radio terminal and the rest of the access network, and the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

"Determining B based on A" in the present application means that the factor A should be considered when B is determined. It is not limited to "determining B based on A alone", but also includes "determining B based on A and C", "determining B based on A, C and E", "determining C based on A, and further determining B based on C", etc. In addition, it may also include using A as a condition for determining B, for example, "when A satisfies a first condition, determining B using the first method", and for another example, "when A satisfies a second condition, determining B", etc. For still another example, "when A satisfies a third condition, determining B based on the first parameter" and so on. It may also be that A is used as a condition for determining a factor of B, for example, "when A satisfies the first condition, determining C using the first method, and further determining B based on C" and so on.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented procedure and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for metadata transmission, performed by a terminal, comprising:
determining *s* preamble sequences carrying metadata, and determining *t* root sequences corresponding to the *s* preamble sequences, wherein the metadata comprises *s* data segments, each data segment corresponds to one preamble sequence, one or more preamble sequences correspond to one root sequence, and both *t* and *s* are positive integers; and
transmitting the s preamble sequences and the *t* root sequences.

2. The method of claim 1, wherein determining the *s* preamble sequences carrying the metadata comprises:
obtaining the *s* data segments of the metadata;
determining a preamble sequence pool corresponding to each data segment to obtain s preamble sequence pools; and
determining the s preamble sequences based on the s preamble sequence pools.

3. The method of claim 2, wherein determining the preamble sequence pool corresponding to each data segment comprises:
obtaining the preamble sequence pool corresponding to each data segment locally, wherein all preamble sequences in the preamble sequence pool corresponding to each data segment are given preamble sequences; or
obtaining the preamble sequence pool corresponding to each data segment configured by a network device; or
generating a corresponding preamble sequence pool for each data segment.

4. The method of claim 2 or 3, wherein determining the s preamble sequences based on the s preamble sequence pools comprises:
selecting one preamble sequence from the preamble sequence pool corresponding to each data segment, and determining the s preamble sequences, wherein a preamble sequence selected from a preamble sequence pool corresponding to an i-th data segment is associated with a bit value of the i-th data segment, 1 ≤i≤s.

5. The method of claim 2, wherein the s data segments of the metadata are obtained in a given mode or a mode of network indication.

6. The method of claim 2, wherein determining the *t* root sequences corresponding to the s preamble sequences comprises:
determining *t* root sequence pools corresponding to the s preamble sequence pools, one or more preamble sequence pools corresponding to one root sequence pool; and
determining the *t* root sequences based on the *t* root sequence pools.

7. The method of claim 6, wherein determining the *t* root sequence pools corresponding to the s preamble sequence pools comprises:
obtaining the *t* root sequence pools corresponding to the s preamble sequence pools locally, one or more preamble sequence pools corresponding to one given root sequence pool; or
obtaining the *t* root sequence pools corresponding to the *s* preamble sequence pools configured by a network device; or
dividing the s preamble sequence pools into *t* preamble sequence pool groups, each preamble sequence pool group comprises one or more preamble sequence pools; and generating one root sequence pool for one preamble sequence pool group.

8. The method of claim 7, wherein generating the one root sequence pool for the one preamble sequence pool group comprises:
determining a quantity of different roots of each preamble sequence pool in each preamble sequence pool group; and
generating a root sequence pool corresponding to each preamble sequence pool group based on the quantity of different roots of each preamble sequence pool in each preamble sequence pool group.

9. The method of claim 8, wherein determining the *t* root sequences based on the *t* root sequence pools comprises:
determining indexes of roots of a target preamble sequence, wherein the target preamble sequence is a preamble sequence selected from one or more preamble sequence pools corresponding to each root sequence pool;
combining the indexes of the roots of the target preamble sequence into combined data sequentially; and
selecting one root sequence from each root sequence pool based on the combined data to determine the *t* root sequences, wherein a root sequence selected from a *j*-th root sequence pool is associated with a bit value of a *j*-th combined data, 1≤j≤t.

10. A method for metadata transmission, performed by a network device, comprising:
receiving *t* root sequences and s preamble sequences, wherein metadata comprises s data segments, each data segment corresponds to one preamble sequence, one or more preamble sequences correspond to one root sequence, and both *t* and *s* are positive integers.

11. The method of claim 10, wherein after receiving the *t* root sequences and the *s* preamble sequences, the method further comprises:
taking out sequences with different roots from a root sequence pool and performing correlation operations with the *t* root sequences respectively to obtain bit values of roots;
taking out a corresponding root from a preamble sequence pool corresponding to each data segment based on the bit values of roots and performing correlation operations with each preamble sequence to obtain a bit value of each data segment; and
cascading the bit value of each data segment sequentially to obtain a bit value of the metadata.

12. A terminal, comprising a memory, a transceiver, and a processor;
the memory is used for storing a computer program; the transceiver is used for receiving and transmitting data under control of the processor; and the processor is used for reading the computer program in the memory and performing the following operations:
determining *s* preamble sequences carrying metadata, and determining *t* root sequences corresponding to the *s* preamble sequences, wherein the metadata comprises *s* data segments, each data segment corresponds to one preamble sequence, one or more preamble sequences correspond to one root sequence, and both *t* and *s* are positive integers; and
transmitting the *s* preamble sequences and the *t* root sequences.

13. The terminal of claim 12, wherein determining the s preamble sequences carrying the metadata comprises:
obtaining the s data segments of the metadata;
determining a preamble sequence pool corresponding to each data segment to obtain s preamble sequence pools; and
determining the s preamble sequences based on the s preamble sequence pools.

14. The terminal of claim 13, wherein determining the preamble sequence pool corresponding to each data segment comprises:
obtaining the preamble sequence pool corresponding to each data segment locally, wherein all preamble sequences in the preamble sequence pool corresponding to each data segment are given preamble sequences; or
obtaining the preamble sequence pool corresponding to each data segment configured by a network device; or
generating a corresponding preamble sequence pool for each data segment.

15. The terminal of claim 13 or 14, wherein determining the s preamble sequences based on the s preamble sequence pools comprises:
selecting one preamble sequence from the preamble sequence pool corresponding to each data segment, and determining the s preamble sequences, wherein a preamble sequence selected from a preamble sequence pool corresponding to an *i*-th data segment is associated with a bit value of the *i*-th data segment, 1 ≤i≤s.

16. The terminal of claim 13, wherein the s data segments of the metadata are obtained in a given mode or a mode of network indication.

17. The terminal of claim 13, wherein determining the *t* root sequences corresponding to the s preamble sequences comprises:
determining *t* root sequence pools corresponding to the s preamble sequence pools, one or more preamble sequence pools corresponding to one root sequence pool; and
determining the *t* root sequences based on the *t* root sequence pools.

18. The terminal of claim 17, wherein determining the *t* root sequence pools corresponding to the s preamble sequence pools comprises:
obtaining the *t* root sequence pools corresponding to the s preamble sequence pools locally, one or more preamble sequence pools corresponding to one given root sequence pool; or
obtaining the *t* root sequence pools corresponding to the s preamble sequence pools configured by a network device; or
dividing the s preamble sequence pools into *t* preamble sequence pool groups, each preamble sequence pool group comprises one or more preamble sequence pools; and generating one root sequence pool for one preamble sequence pool group.

19. The terminal of claim 18, wherein generating the one root sequence pool for the one preamble sequence pool group comprises:
determining a quantity of different roots of each preamble sequence pool in each preamble sequence pool group; and
generating a root sequence pool corresponding to each preamble sequence pool group based on the quantity of different roots of each preamble sequence pool in each preamble sequence pool group.

20. The terminal of claim 19, wherein determining the *t* root sequences based on the *t* root sequence pools comprises:
determining indexes of roots of a target preamble sequence, wherein the target preamble sequence is a preamble sequence selected from one or more preamble sequence pools corresponding to each root sequence pool;
combining the indexes of the roots of the target preamble sequence into combined data sequentially; and
selecting one root sequence from each root sequence pool based on the combined data to determine the *t* root sequences, wherein a root sequence selected from a *j*-th root sequence pool is associated with a bit value of a *j*-th combined data, 1≤j≤t.

21. A network device, comprising a memory, a transceiver, and a processor;
the memory is used for storing a computer program; the transceiver is used for receiving and transmitting data under control of the processor; and the processor is used for reading the computer program in the memory and performing the following operations:
receiving *t* root sequences and s preamble sequences, wherein metadata comprises s data segments, each data segment corresponds to one preamble sequence, one or more preamble sequences correspond to one root sequence, and both *t* and *s* are positive integers.

22. The network device of claim 21, wherein after receiving the *t* root sequences and the s preamble sequences, the operations further comprise:
taking out sequences with different roots from a root sequence pool and performing correlation operations with the *t* root sequences respectively to obtain bit values of roots;
taking out a corresponding root from a preamble sequence pool corresponding to each data segment based on the bit values of roots and performing correlation operations with each preamble sequence to obtain a bit value of each data segment; and
cascading the bit value of each data segment sequentially to obtain a bit value of the metadata.

23. An apparatus for metadata transmission, comprising:
a determining module, used for determining s preamble sequences carrying metadata, and determining *t* root sequences corresponding to the s preamble sequences, wherein the metadata comprises s data segments, each data segment corresponds to one preamble sequence, one or more preamble sequences correspond to one root sequence, and both *t* and *s* are positive integers; and
a transmitting module, used for transmitting the s preamble sequences and the *t* root sequences.

24. The apparatus of claim 23, wherein the determining module comprises an obtaining sub-module, a first determining sub-module and a second determining sub-module;
the obtaining sub-module is used for obtaining the s data segments of the metadata;
the first determining sub-module is used for determining a preamble sequence pool corresponding to each data segment, to obtain s preamble sequence pools; and
the second determining sub-module is used for determining the s preamble sequences based on the s preamble sequence pools.

25. The apparatus of claim 24, wherein the first determining sub-module comprises:
a first obtaining unit, used for obtaining the preamble sequence pool corresponding to each data segment locally, wherein all preamble sequences in the preamble sequence pool corresponding to each data segment are given preamble sequences; or
a second obtaining unit, used for obtaining the preamble sequence pool corresponding to each data segment configured by a network device; or
a first generating unit, used for generating a corresponding preamble sequence pool for each data segment.

26. The apparatus of claim 24 or 25, wherein the first determining sub-module is used for:
selecting one preamble sequence from the preamble sequence pool corresponding to each data segment, and determining the *s* preamble sequences, wherein a preamble sequence selected from a preamble sequence pool corresponding to an *i*-th data segment is associated with a bit value of the *i*-th data segment, 1 ≤i≤s.

27. The apparatus of claim 24, wherein the s data segments of the metadata are obtained in a given mode or a mode of network indication.

28. The apparatus of claim 24, wherein the determining module comprises a third determining sub-module and a fourth determining sub-module;
the third determining sub-module is used for determining *t* root sequence pools corresponding to the *s* preamble sequence pools, one or more preamble sequence pools corresponding to one root sequence pool; and
the fourth determining sub-module is used for determining the *t* root sequences based on the *t* root sequence pools.

29. The apparatus of claim 28, wherein the third determining sub-module comprises:
a third obtaining unit, used for obtaining the *t* root sequence pools corresponding to the *s* preamble sequence pools locally, one or more preamble sequence pools corresponding to one given root sequence pool; or
a fourth obtaining unit, used for obtaining the *t* root sequence pools corresponding to the s preamble sequence pools configured by a network device; or
a dividing unit and a second generating unit, wherein the dividing unit is used for dividing the s preamble sequence pools into *t* preamble sequence pool groups, each preamble sequence pool group comprises one or more preamble sequence pools; and the second generating unit is used for generating one root sequence pool for one preamble sequence pool group.

30. The apparatus of claim 29, wherein the second generating unit comprises a determining subunit and a generating subunit;
the determining subunit is used for determining a quantity of different roots of each preamble sequence pool in each preamble sequence pool group; and
the generating subunit is used for generating a root sequence pool corresponding to each preamble sequence pool group based on the quantity of different roots of each preamble sequence pool in each preamble sequence pool group.

31. The apparatus of claim 30, wherein the fourth determining sub-module comprises a first determining unit, a combining unit and a second determining unit;
the first determining unit is used for determining indexes of roots of a target preamble sequence, wherein the target preamble sequence is a preamble sequence selected from one or more preamble sequence pools corresponding to each root sequence pool;
the combining unit is used for combining the indexes of the roots of the target preamble sequence into combined data sequentially; and
a second determining unit is used for selecting one root sequence from each root sequence pool based on the combined data to determine the *t* root sequences, wherein a root sequence selected from a *j*-th root sequence pool is associated with a bit value of a *j*-th combined data, 1 ≤j≤t.

32. An apparatus for metadata transmission, comprising:
a receiving module, used for receiving *t* root sequences and s preamble sequences, wherein metadata comprises *s* data segments, each data segment corresponds to one preamble sequence, one or more preamble sequences correspond to one root sequence, and both *t* and *s* are positive integers.

33. The apparatus of claim 32, further comprising a first processing module, a second processing module and a third processing module;
the first processing module is used for taking out sequences with different roots from a root sequence pool and performing correlation operations with the *t* root sequences respectively to obtain bit values of roots;
the second processing module is used for taking out a corresponding root from a preamble sequence pool corresponding to each data segment based on the bit values of roots and performing correlation operations with each preamble sequence to obtain a bit value of each data segment; and
the third processing module is used for cascading the bit value of each data segment sequentially to obtain a bit value of the metadata.

34. A computer-readable storage medium, wherein the computer-readable storage medium stores a computer program that, causes a computer to perform the method for metadata transmission of any of claims 1 to 9.

35. A computer-readable storage medium, wherein the computer-readable storage medium stores a computer program that, causes a computer to perform the method for metadata transmission of any of claims 10 and 11.
